# EUROPEAN PATENT SPECIFICATION

(11) **EP 2 779 710 B1**
(45) Date of publication and mention of the grant of the patent: **28.10.2015**
(21) Application number: 14150719.4
(22) Date of filing: 10.01.2014
(51) Int. Cl.: H04W 4/20, H04L 29/08

(54) **Method of combining network data and mobile device using the same**
Verfahren zum Kombinieren von Netzwerkdaten und mobile Vorrichtung damit
Procédé de combinaison de données de réseau et dispositif mobile utilisant celui-ci

(30) Priority: 11.03.2013 US 201313792227
(43) Date of publication of application: 17.09.2014
(73) Proprietor: HTC Corporation, Taoyuan City 330 (TW)
(72) Inventor: Lin, Zih-Ci, 231 New Taipei City (TW); Chang, Ruey-Jer, 231 New Taipei City (TW); Yang, Wei-Chung, 231 New Taipei City (TW)
(74) Representative: Ljungberg, Robert

(56) References cited:
- US-A1- 2010 161 369
- US-A1- 2011 213 785
- US-A1- 2012 036 200
- US-A1- 2012 163 269

## Description

### Background of the Invention

### 1. Field of the Invention

The present invention relates to a method for combining network data and a mobile device using the same, and more specifically, to a method for combining network data according to various parameters, so as to facilitate viewing and replying to network data, and a mobile device using the same.

### 2. Description of the Prior Art

With the growing popularity of various social networks (e.g. Facebook, Twitter, etc.), it is now common for a user to have many social network accounts. Thus, users may often post or share a same piece of information on these different accounts, respectively. Thus, data redundancy becomes a problem, as another person who subscribes to the user's social status may receive redundant or identical messages originating from different social network accounts of the user as disclosed for example by US2011/0213785 or US2010/0161369. This may cause information overload by requiring users to sift through and process a lot of redundant social network data, which is also very time-consuming. Also, it is also hard to reply to all these messages originating from different social network websites.

Therefore, it is necessary to develop a way for combining or aggregating similar social network data into a more concise and condensed form, so as to facilitate social data viewing and replying.

### Summary of the Invention

It is therefore an objective of the present invention to provide a method for combining network data so as to allow a user to effectively process and reply to network data.

The present invention discloses a method of combining network data for a mobile device, comprising connecting to a plurality of networks; receiving a plurality of data from the plurality of networks; obtaining a plurality of parameters from each of the plurality of data; comparing the plurality of parameters of each of the plurality of data, to obtain a plurality of similar data; combining the plurality of similar data into at least one combined message; and displaying the at least one combined message.

The present invention further discloses a method of replying to network data for a mobile device, comprising obtaining a combined message corresponding to a plurality of similar data from a plurality of networks; obtaining a reply message corresponding to the combined message from a user; and replying to at least one of the plurality of similar data with the reply message.

The present invention further discloses a mobile device for combining network data, comprising a communication interfacing unit, for connecting to a plurality of networks; a processing means; and a storage unit, for storing a program code to indicate the processing means to perform the following steps: receive a plurality of data from the plurality of networks; obtain a plurality of parameters from each of the plurality of data; compare the plurality of parameters of each of the plurality of data, to obtain a plurality of similar data; combine the plurality of similar data into at least one combined message; and display the at least one combined message.

The present invention further discloses a mobile device for replying to network data, comprising a communication interfacing unit, for connecting to a plurality of networks; a processing means; and a storage unit, for storing a program code to indicate the processing means to perform the following steps: obtain a combined message corresponding to a plurality of similar data from the plurality of networks; obtain a reply message corresponding to the combined message from a user; and reply to at least one of the plurality of similar data with the reply message.

These and other objectives of the present invention are provided by a method, mobile device and machine readable storage medium according to the appended claims 1,6 and 11 and will no doubt become obvious to those of ordinary skill in the art after reading the following detailed description of the preferred embodiment that is illustrated in the various figures and drawings.

### Brief Description of the Drawings

FIG.1 is a schematic diagram of a process according to an example of the present invention.
FIG.2 is a schematic diagram of a process according to an example of the present invention.
FIG.3A and 3B are schematic diagrams of operations of a user viewing and replying to network data according to the processes shown in FIGs. 1 and 2, respectively.
FIG. 4 is a schematic diagram of a mobile device according to an example of the present invention.

### Detailed Description

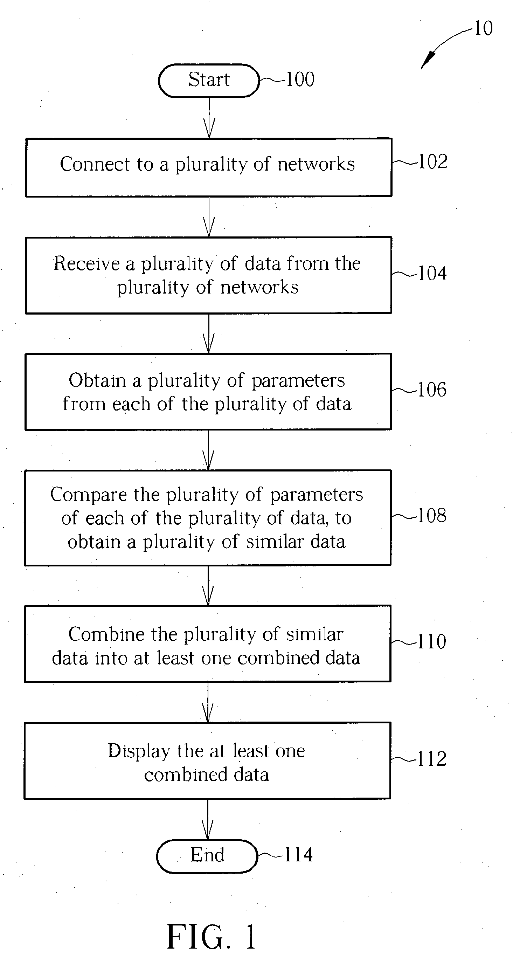

Please refer to FIG. 1, which is a schematic diagram of a process 10 according to an example of the present invention. The process 10 is a method for combining network data for a mobile device. The network data may be text/video/audio messages, photos, images, or icons, and is not limited herein. The process 10 includes the following steps:
Step 100: Start.
Step 102: Connect to a plurality of networks.
Step 104: Receive a plurality of data from the plurality of networks.
Step 106: Obtain a plurality of parameters from each of the plurality of data.
Step 108: Compare the plurality of parameters of each of the plurality of data, to obtain a plurality of similar data.
Step 110: Combine the plurality of similar data into at least one combined data.
Step 112: Display the at least one combined data.
Step 114: End.

According to the process 10, the user can use the mobile device to access a plurality of data fed from various networks, such as public network, private network and social network. The data are first compared to see if any of them are similar according to a plurality of parameters obtained from each of the plurality of data. If so, a plurality of similar data are obtained and may be condensed into at least one combined data. The user is only presented with the combined data, and this significantly reduces the amount of information load that the user has to process. In the prior art, no such comparing or combining is performed, and the user may be faced with information overload by having to process a lot of redundant network data, which is also very time-consuming. In comparison, according to the process 10, the mobile device smartly identifies similar network data from the user's friend feeds, and only presents to the user the combined data, which is much more concise and condensed.

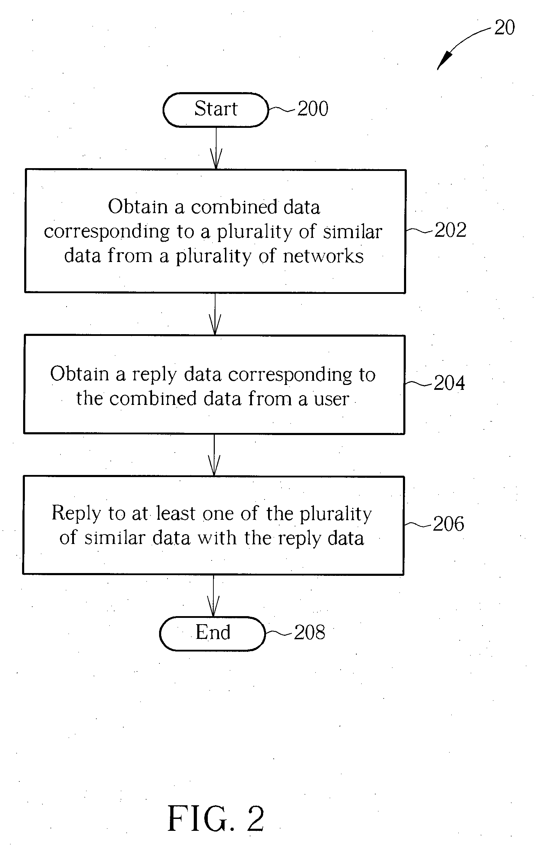

After the user views the combined data, he/she may choose to reply to the data. Since the combined data may possibly be composed of data sourced from different networking sites, the user should be able to choose to reply to some or all of the source networks. Accordingly, please refer to FIG. 2, which is a schematic diagram of a process 20 according to an example of the present invention. The process 20 is a method for replying to network data, and includes the following steps:
Step 200: Start.
Step 202: Obtain a combined data corresponding to a plurality of similar data from a plurality of networks.
Step 204: Obtain a reply data corresponding to the combined data from a user.
Step 206: Reply to at least one of the plurality of similar data with the reply data.
Step 208: End.

According to the process 20, after the user has viewed the combined data, the user may choose to reply to some or all of the source data within the similar data, which may have originated from different sites within the networks. The user is prompted to input a reply data, and may be provided with the option of replying to some or all of the source data. In the prior art, similar network data are scattered and not combined, and thus the user cannot choose to reply to the data together, but instead has to reply to each data separately. The user is thus faced with a repetitive time-consuming task which can be automated. In comparison, according to the process 20, the user can input the reply once, and the mobile device smartly posts the reply data to some or all of the source data from various sites, according to the user's choosing.

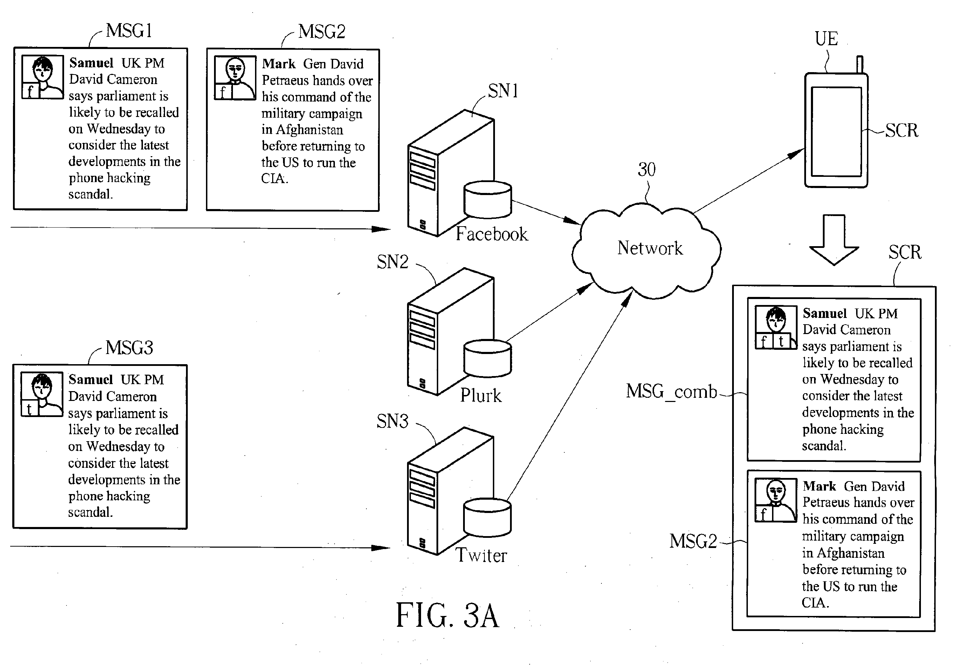

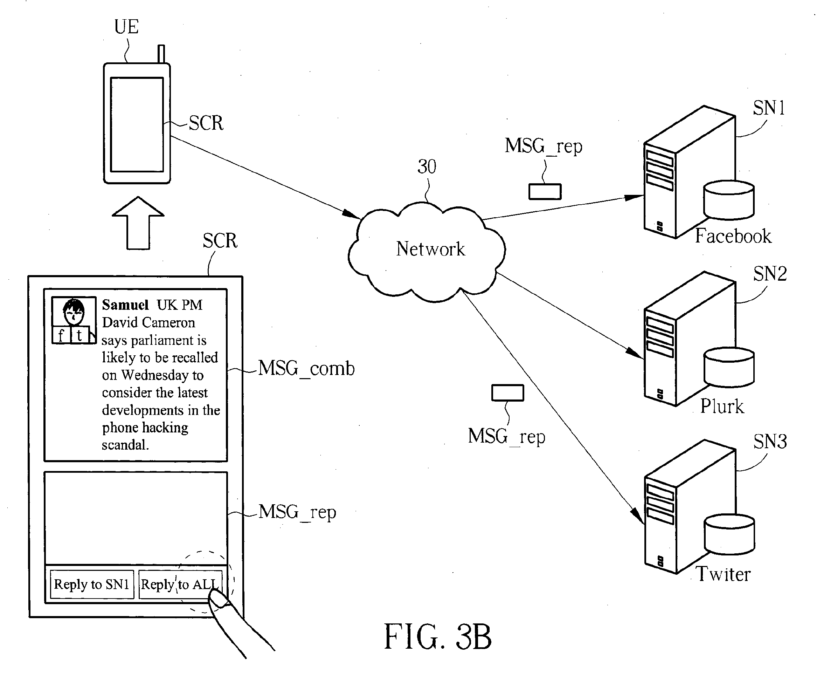

In more detail, please refer to FIG. 3A and 3B, which are schematic diagrams of operations of viewing and replying to network data according to the processes 10 and 20 shown in FIGs. 1 and 2. As shown in FIG. 3A, a mobile device UE connects to and receives network data from networks SN1, SN2, and SN3 (e.g. Facebook, Plurk, and Twitter, respectively) via a network 30. In this example, the network data are text messages for simplicity. Therefore, the mobile device UE receives messages MSG1-MSG3 from the networks SN1-SN3, wherein the messages MSG1 and MSG2 originate from the network SN1, and the message MSG3 originates from the network SN3. Next, there may be three parameters P1, P2, and P3 obtained from each of the messages MSG1-MSG3. For a specific message, the parameter P1 may be the author of the message; the parameter P2 may be the content body of the message; and the parameter P3 may be the date and time which the message was posted or generated. According to the process 10, the parameters P1-P3 of the messages MSG1-MSG3 are compared for similarity. In FIG. 3A, the messages MSG1 and MSG3 have similar content and are posted by a same author onto different networks SN1 and SN3, respectively. In other words, the author "Samuel" shared the same message on his Facebook and Twitter account, most probably at the same time. Therefore, since the messages MSG1 and MSG3 are posted by the same user, they would have identical values for the parameter P1. Since the messages MSG1 and MSG3 are posted around the same time, their parameters P3 would also have similar values (e.g. within a time range of ten minutes). Also, the parameter P2 would also be similar, if not identical, since the message contains the same information. For instance, common keywords may be found in the messages MSG1 and MSG3 (e.g. "David Cameron", "Parliament", or "phone hacking"). On the other hand, the message MSG2 was posted by a totally different author (the parameter P1 has value "Mark") on the network SN1, probably at a completely different time point. Therefore, after comparing the messages MSG1-MSG3, the mobile device UE would determine that the messages MSG1 and MSG3 are similar messages, and combine the similar messages MSG1 and MSG3 into a combined message MSG_comb according to the process 10. Finally, the user is presented with the combined message MSG_comb and the separate message MSG_2. As such, redundant data is combined and the user is faced with a lower information load, and thus enabled to process his/her network friend feed more efficiently.

Next, please continue to refer to FIG. 3B, which shows the user replying to network data on the mobile device UE according to the process 20. As shown in Fig. 3B, the user selects the combined message MSG_comb and, after reading the message, wishes to reply to the combined message MSG_comb. The combined message MSG_comb corresponds to the MSG1 and MSG3 previously received from the networks SN1 and SN3, respectively. The user inputs a reply message MSG_rep, and is presented with the option to reply to only one or all of the source networks SN1 and SN3. For example, the user may select to reply to all of the sources, so the MSG_rep is accordingly transmitted to the corresponding networks SN1 and SN3 via the network 30.

In FIG. 3A and FIG. 3B, "f" or "t" included in messages MSG1, MSG2, MSG3 and the combined message MSG_comb represent which site the corresponding message is originated from. For example, the messages MSG1 and MSG2 are originated from the network SN1, i.e. Facebook; thus, the messages MSG1 and MSG2 are marked with "f". However, the "f" and "t" marks are used to illustrate the example shown in FIG. 3A and FIG. 3B, and may not be shown in practical, or may be replaced by different notations.

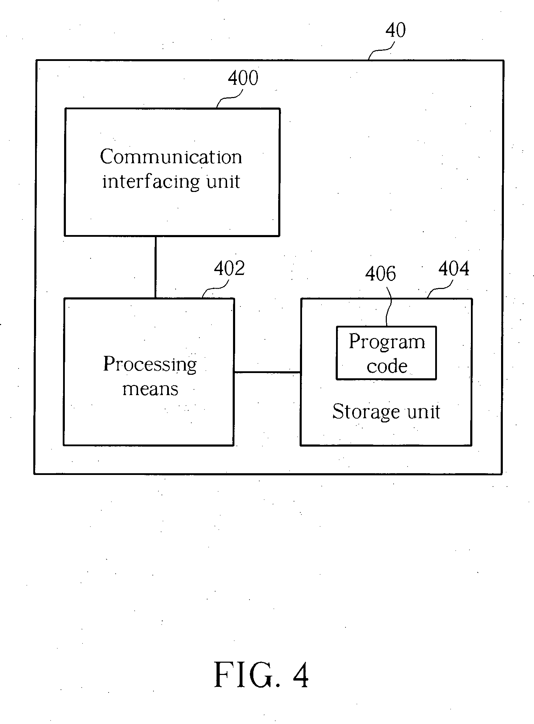

In addition, each step of the processes 10 and 20 may be compiled into corresponding program code to implement the processes 10 and 20 in a mobile device. Please refer to FIG. 4, which is a schematic diagram of a mobile device 40 according to an example of the present invention. The mobile device 40 includes a communication interfacing unit 400, a processing means 402, a storage unit 404, and a program code 406. The program code 406 is stored in the storage unit 404, and can be used for implementing the process 10 and 20 by indicating the processing means 402 to perform operations corresponding to the processes 10, 20 according to network data received by the communication interfacing unit 400. Implementing the process 10, 20 through the program code 406 should be well-known to those skilled in the art, and is not detailed here. Notably, the processing means 402 and the storage unit 404 of the mobile device 40 may be implemented via hardware, software, or firmware, etc., though not limited thereto. The mobile device 40 may be any electronic product such as mobile phone, tablet, personal digital assistant (PDA), etc.

Note that in the context of this disclosure, a machine readable storage medium or a non-transitory computer-readable medium stores programs for use by or in connection with a data processing system, apparatus, or device. In this regard, one example, among others, is a machine readable storage medium embodying a program executable in a data processing system such as the mobile device 40 in FIG. 4. In accordance with such examples, the program may be executed cause the data processing system to perform the process 10 and/or 20.

Notably, a spirit of the present invention is to facilitate network data viewing or replying by combining similar data according to different parameters. Suitable modifications or variations may be made by those skilled in the art, and are not limited to the embodiments above. For example, the parameters are not limited to the ones used in the aforementioned embodiment (author, content, date). With smart phones growing more powerful, it is also possible to determine the similarity between data using a wide variety of different parameters, such as GPS location, IP address, URL links, photos, audios and videos, etc. The above embodiment combines data by a same author posted on different networks. However, this is not limited thereto. It is also possible to aggregate the data according to other parameters. For example, data containing similar contents such as keywords or shared web links can be combined to show how many of your friends are following a same popular event, news article, etc. When replying, it is possible to reply to all of the friends who share an interest in the topic. Furthermore, aggregation by location can allow users to filter out data from friends within a geographical proximity, and reply to these nearby friends.

In the prior art, someone who subscribes to a user's social status may receive redundant or identical data originating from different network accounts of the user. This may cause information overload by requiring users to sift through and process a lot of redundant network data, which is also very time-consuming. In comparison, the present invention allows similar social data to be combined before being presented to the user. Thus, the user would be able to process and reply to the network data with much greater efficiency.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method of combining network data for a mobile device (40), comprising:
connecting the mobile device (40) via a network (30) to a plurality of networks (SN1, SN2, SN3) wherein the plurality of networks (SN1, SN2, SN3) preferably comprise one or more of public network, private network and social network;
receiving at the mobile device (40) a plurality of data (MSG1, MSG2, MSG2) from the plurality of networks;
obtaining a plurality of parameters (P1, P2, P3) wherein the plurality of parameters (P1, P2, P3) preferably are one or more of author ID, data content, image content obtained from each of the plurality of data, video content obtained from each of the plurality of data, data generating time, data generating location, network type, and internet protocol (IP) address from each of the plurality of data (MSG1, MSG2, MSG2);
comparing the plurality of parameters (P1, P2, P3) of each of the plurality of data (MSG1, MSG2, MSG2), to obtain a plurality of similar data wherein the plurality of similar data preferably have at least one similar parameter, selected from at least one of author ID, data content, image content obtained from each of the plurality of similar data, video content obtained from each of the plurality of similar data, data generating time, data generating location, network type, and internet protocol (IP) address;
combining the plurality of similar data into at least one combined data (MSG_comb); and
displaying the at least one combined data (MSG_comb).

2. The method of claim 1, wherein the step of comparing the plurality of parameters (P1, P2, P3) of each of the plurality of data (MSG1, MSG2, MSG2) to obtain the plurality of similar data comprises determining a first data and a second data within the plurality of data (MSG1, MSG2, MSG2) are similar data if the first data and the second data have at least one identical matching parameter or requesting a user to manually determine whether a first data and a second data within the plurality of data (MSG1, MSG2, MSG2) are similar data if the first data and the second data have at least one similar but not identical matching parameter.

3. The method of claim 1, further comprising displaying each of a plurality of dissimilar data within the plurality of data (MSG1, MSG2, MSG2) excluding the plurality of similar data.

4. A method of claim 1 comprising:
obtaining a reply data corresponding to the combined data (MSG_comb) from a user; and
replying to at least one of the plurality of similar data with the reply data (MSG_rep).

5. The method of claim 4, wherein the step of replying to at least one of the plurality of similar data with the reply data (MSG_rep) comprises requesting a user to manually determine whether to reply to all of the plurality of similar data with the reply data (MSG_rep).

6. A mobile device (40) for combining network data, comprising:
a communication interfacing unit (400), for connecting via a network (30) to a plurality of networks (SN1, SN2, SN3) wherein the plurality of networks (SN1, SN2,
SN3)preferably comprise one or more of public network, private network and social network;
a processing means (402); and
a storage unit (404), for storing a program code (406) to indicate the processing means (402) to perform the following steps:
receive a plurality of data (MSG1, MSG2, MSG3) from the plurality of networks (SN1, SN2, SN3);
obtain a plurality of parameters (P1, P2, P3) wherein the plurality of parameters (P1, P2, P3) preferably are one or more of author ID, data content, image content obtained from each of the plurality of data, video content obtained from each of the plurality of data, data generating time, data generating location, network type, and internet protocol (IP) address from each of the plurality of data (MSG1, MSG2, MSG3);
compare the plurality of parameters (P1, P2, P3) of each of the plurality of data (MSG1, MSG2, MSG3), to obtain a plurality of similar data wherein the plurality of similar data preferably have at least one similar parameter, selected from at least one of author ID, data content, image content obtained from each of the plurality of similar data, video content obtained from each of the plurality of similar data, data generating time, data generating location, network type, and internet protocol (IP) address;
combine the plurality of similar data into at least one combined data (MSG_comb); and
display the at least one combined data (MSG_comb).

7. The mobile device (40) of claim 6, wherein the processing means (402) determines a first data and a second data within the plurality of data (MSG1, MSG2, MSG3) are similar data if the first data and the second data have at least one identical matching parameter or the processing means (402) requests a user to manually determine whether a first data and a second data within the plurality of data (MSG1, MSG2, MSG3) are similar data if the first data and the second data have at least one similar but not identical matching parameter.

8. The mobile device (40) of claim 6, wherein the program code (406) further indicates the processing means (402) display each of a plurality of dissimilar data within the plurality of data excluding the plurality of similar data.

9. A mobile device (40) of claim 6, comprising:
the storage unit (404), for storing a program code (406) to indicate the processing means (402) to perform the following steps:
obtain a reply data (MSG_rep) corresponding to the combined data (MSG_comb) from a user; and
reply to at least one of the plurality of similar data with the reply data (MSG_rep).

10. The mobile device (40) of claim 9, wherein the processing means (402) requests a user to manually determine whether to reply to all of the plurality of similar data with the reply data (MSG_rep).

11. A machine readable storage medium storing executable program instructions which when executed cause a data processing system to perform a method, comprising:
connecting a mobile device (40) via a network (30) to a plurality of networks (SN1, SN2, SN3);
receiving a plurality of data (MSG1, MSG2, MSG3) from the plurality of networks (SN1, SN2, SN3) wherein the plurality of networks (SN1, SN2, SN3) preferably comprise one or more of public network, private network and social network;
obtaining a plurality of parameters (P1, P2, P3) wherein the plurality of parameters preferably are one or more of author ID, data content, image content obtained from each of the plurality of data, video content obtained from each of the plurality of data, data generating time, data generating location, network type, and internet protocol (IP) address from each of the plurality of data (MSG1, MSG2, MSG3);
comparing the plurality of parameters (P1, P2, P3) of each of the plurality of data (MSG1, MSG2, MSG3), to obtain a plurality of similar data wherein the plurality of similar data preferably have at least one similar parameter, selected from at least one of author ID, data content, image content obtained from each of the plurality of similar data, video content obtained from each of the plurality of similar data, data generating time, data generating location, network type, and internet protocol (IP) address;
combining the plurality of similar data into at least one combined data (MSG_comb); and
displaying the at least one combined data (MSG_comb).

12. The medium as in claim 11, wherein the step of comparing the plurality of parameters (P1, P2, P3) of each of the plurality of data (MSG1, MSG2, MSG3) to obtain the plurality of similar data comprises determining a first data and a second data within the plurality of data are similar data if the first data and the second data have at least one identical matching parameter or requesting a user to manually determine whether a first data and a second data within the plurality of data are similar data if the first data and the second data have at least one similar but not identical matching parameter.

13. The medium as in claim 11, further comprising
displaying each of a plurality of dissimilar data within the plurality of data (MSG1, MSG2, MSG3) excluding the plurality of similar data.

14. A machine readable storage medium of claim 11 wherein
obtaining a reply data (MSG_rep) corresponding to the combined data (MSG_comb) from a user; and
replying to at least one of the plurality of similar data with the reply data (MSG_rep).

15. The medium as in claim 14, wherein the step of replying to at least one of the plurality of similar data with the reply data (MSG_rep) comprises requesting a user to manually determine whether to reply to all of the plurality of similar data with the reply data (MSG_rep).

## Patentansprüche

1. Ein Verfahren zum Kombinieren von Netzdaten für eine mobile Vorrichtung (40), das Folgendes beinhaltet:
Verknüpfen der mobilen Vorrichtung (40) mit einer Vielzahl von Netzen (SN1, SN2, SN3) über ein Netz (30), wobei die Vielzahl von Netzen (SN1, SN2, SN3) vorzugsweise eines oder mehrere von einem öffentlichen Netz, privaten Netz und sozialen Netz beinhaltet; Empfangen einer Vielzahl von Daten (MSG1, MSG2, MSG2) von der Vielzahl von Netzen an der mobilen Vorrichtung (40);
Erhalten einer Vielzahl von Parametern (P1, P2, P3), wobei die Vielzahl von Parametern (P1, P2, P3) vorzugsweise eines oder mehrere von Folgendem ist:
Verfasser-ID, Dateninhalt, Bildinhalt, erhalten von jeder von der Vielzahl von Daten, Videoinhalt, erhalten von jeder von der Vielzahl von Daten, Zeiterzeugungsdaten, Ortserzeugungsdaten, Netztyp und Internetprotokolladresse (IP-Adresse) von jeder von der Vielzahl von Daten (MSG1, MSG2, MSG2);
Vergleichen der Vielzahl von Parametern (P1, P2, P3) von jeder von der Vielzahl von Daten (MSG1, MSG2, MSG2), um eine Vielzahl von ähnlichen Daten zu erhalten, wobei die Vielzahl von ähnlichen Daten vorzugsweise mindestens einen ähnlichen Parameter aufweist, ausgewählt aus mindestens einem von Verfasser-ID, Dateninhalt, Bildinhalt, erhalten von jeder von der Vielzahl von ähnlichen Daten, Videoinhalt, erhalten von jeder von der Vielzahl von ähnlichen Daten, Zeiterzeugungsdaten, Ortserzeugungsdaten, Netztyp und Internetprotokolladresse (IP-Adresse);
Kombinieren der Vielzahl von ähnlichen Daten zu mindestens einer kombinierten Dateneinheit (MSG_comb); und
Anzeigen der mindestens einen kombinierten Dateneinheit (MSG_comb).

2. Verfahren gemäß Anspruch 1, wobei der Schritt des Vergleichens der Vielzahl von Parametern (P1, P2, P3) von jeder von der Vielzahl von Daten (MSG1, MSG2, MSG2), um die Vielzahl von ähnlichen Daten zu erhalten, Folgendes beinhaltet: Bestimmen, dass erste Daten und zweite Daten innerhalb der Vielzahl von Daten (MSG1, MSG2, MSG2) ähnliche Daten sind, falls die ersten Daten und die zweiten Daten mindestens einen identischen übereinstimmenden Parameter aufweisen, oder Auffordern eines Benutzers, manuell zu bestimmen, ob erste Daten und zweite Daten innerhalb der Vielzahl von Daten (MSG1, MSG2, MSG2) ähnliche Daten sind, falls die ersten Daten und die zweiten Daten mindestens einen ähnlichen aber nicht identischen übereinstimmenden Parameter aufweisen.

3. Verfahren gemäß Anspruch 1, das ferner das Anzeigen jeder von einer Vielzahl von nicht ähnlichen Daten innerhalb der Vielzahl von Daten (MSG1, MSG2, MSG2) mit Ausnahme der Vielzahl von ähnlichen Daten beinhaltet.

4. Verfahren gemäß Anspruch 1, das Folgendes beinhaltet:
Erhalten von Antwortdaten, die den kombinierten Daten (MSG_comb) entsprechen, von einem Benutzer; und
Antworten auf mindestens eine von der Vielzahl von ähnlichen Daten mit den Antwortdaten (MSG_rep).

5. Verfahren gemäß Anspruch 4, wobei der Schritt des Antwortens auf mindestens eine von der Vielzahl von ähnlichen Daten mit den Antwortdaten (MSG_rep) das Auffordern eines Benutzers, manuell zu bestimmen, ob auf alle von der Vielzahl von ähnlichen Daten mit den Antwortdaten (MSG_rep) geantwortet werden soll, beinhaltet.

6. Eine mobile Vorrichtung (40) zum Kombinieren von Netzdaten, die Folgendes beinhaltet:
eine Kommunikationsverbindungseinheit (400) zum Verknüpfen mit einer Vielzahl von Netzen (SN1, SN2, SN3) über ein Netz (30), wobei die Vielzahl von Netzen (SN1, SN2, SN3) vorzugsweise eines oder mehrere von einem öffentlichen Netz, privaten Netz und sozialen Netz beinhaltet;
ein Verarbeitungsmittel (402); und
eine Speichereinheit (404) zum Speichern eines Programmcodes (406), um das Verarbeitungsmittel (402) darauf hinzuweisen, die folgenden Schritte durchzuführen:
Empfangen einer Vielzahl von Daten (MSG1, MSG2, MSG3) von der Vielzahl von Netzen (SN1, SN2, SN3);
Erhalten einer Vielzahl von Parametern (P1, P2, P3), wobei die Vielzahl von Parametern (P1, P2, P3) vorzugsweise eines oder mehrere von Folgendem ist:
Verfasser-ID, Dateninhalt, Bildinhalt, erhalten von jeder von der Vielzahl von Daten, Videoinhalt, erhalten von jeder von der Vielzahl von Daten, Zeiterzeugungsdaten, Ortserzeugungsdaten, Netztyp und Internetprotokolladresse (IP-Adresse) von jeder von der Vielzahl von Daten (MSG1, MSG2, MSG3);
Vergleichen der Vielzahl von Parametern (P1, P2, P3) von jeder von der Vielzahl von Daten (MSG1, MSG2, MSG3), um eine Vielzahl von ähnlichen Daten zu erhalten,
wobei die Vielzahl von ähnlichen Daten vorzugsweise mindestens einen ähnlichen Parameter aufweist, ausgewählt aus mindestens einem von Verfasser-ID, Dateninhalt, Bildinhalt, erhalten von jeder von der Vielzahl von ähnlichen Daten, Videoinhalt,
erhalten von jeder von der Vielzahl von ähnlichen Daten, Zeiterzeugungsdaten, Ortserzeugungsdaten, Netztyp und Internetprotokolladresse (IP-Adresse);
Kombinieren der Vielzahl von ähnlichen Daten zu mindestens einer kombinierten Dateneinheit (MSG_comb); und
Anzeigen der mindestens einen kombinierten Dateneinheit (MSG_comb).

7. Mobile Vorrichtung (40) gemäß Anspruch 6, wobei das Verarbeitungsmittel (402) bestimmt, dass erste Daten und zweite Daten innerhalb der Vielzahl von Daten (MSG1, MSG2, MSG3) ähnliche Daten sind, falls die ersten Daten und die zweiten Daten mindestens einen identischen übereinstimmenden Parameter aufweisen, oder das Verarbeitungsmittel (402) einen Benutzer auffordert, manuell zu bestimmen, ob erste Daten und zweite Daten innerhalb der Vielzahl von Daten (MSG1, MSG2, MSG3) ähnliche Daten sind, falls die ersten Daten und die zweiten Daten mindestens einen ähnlichen aber nicht identischen übereinstimmenden Parameter aufweisen.

8. Mobile Vorrichtung (40) gemäß Anspruch 6, wobei der Programmcode (406) ferner das Verarbeitungsmittel (402) darauf hinweist, jede von einer Vielzahl von nicht ähnlichen Daten innerhalb der Vielzahl von Daten mit Ausnahme der Vielzahl von ähnlichen Daten anzuzeigen.

9. Mobile Vorrichtung (40) gemäß Anspruch 6, die Folgendes beinhaltet:
die Speichereinheit (404) zum Speichern eines Programmcodes (406), um das Verarbeitungsmittel (402) darauf hinzuweisen, die folgenden Schritte durchzuführen:
Erhalten von Antwortdaten (MSG_rep), die den kombinierten Daten (MSG_comb) entsprechen, von einem Benutzer; und
Antworten auf mindestens eine von der Vielzahl von ähnlichen Daten mit den Antwortdaten (MSG_rep).

10. Mobile Vorrichtung (40) gemäß Anspruch 9, wobei das Verarbeitungsmittel (402) einen Benutzer auffordert, manuell zu bestimmen, ob auf alle von der Vielzahl von ähnlichen Daten mit den Antwortdaten (MSG_rep) geantwortet werden soll.

11. Ein maschinenlesbares Speichermedium, das ausführbare Programmanweisungen speichert, die, wenn sie ausgeführt werden, verursachen, dass ein Datenverarbeitungssystem ein Verfahren durchführt, beinhaltend:
Verknüpfen einer mobilen Vorrichtung (40) mit einer Vielzahl von Netzen (SN1, SN2, SN3) über ein Netz (30);
Empfangen einer Vielzahl von Daten (MSG1, MSG2, MSG3) von der Vielzahl von Netzen (SN1, SN2, SN3), wobei die Vielzahl von Netzen (SN1, SN2, SN3) vorzugsweise eines oder mehrere von einem öffentlichen Netz, privaten Netz und sozialen Netz beinhaltet;
Erhalten einer Vielzahl von Parametern (P1, P2, P3), wobei die Vielzahl von Parametern vorzugsweise eines oder mehrere von Folgendem ist: Verfasser-ID, Dateninhalt, Bildinhalt, erhalten von jeder von der Vielzahl von Daten, Videoinhalt,
erhalten von jeder von der Vielzahl von Daten, Zeiterzeugungsdaten, Ortserzeugungsdaten, Netztyp und Internetprotokolladresse (IP-Adresse) von jeder von der Vielzahl von Daten (MSG1, MSG2, MSG3);
Vergleichen der Vielzahl von Parametern (P1, P2, P3) von jeder von der Vielzahl von Daten (MSG1, MSG2, MSG3), um eine Vielzahl von ähnlichen Daten zu erhalten, wobei die Vielzahl von ähnlichen Daten vorzugsweise mindestens einen ähnlichen Parameter aufweist, ausgewählt aus mindestens einem von Verfasser-ID, Dateninhalt, Bildinhalt, erhalten von jeder von der Vielzahl von ähnlichen Daten, Videoinhalt, erhalten von jeder von der Vielzahl von ähnlichen Daten, Zeiterzeugungsdaten, Ortserzeugungsdaten, Netztyp und Internetprotokolladresse (IP-Adresse);
Kombinieren der Vielzahl von ähnlichen Daten zu mindestens einer kombinierten Dateneinheit (MSG_comb); und
Anzeigen der mindestens einen kombinierten Dateneinheit (MSG_comb).

12. Medium gemäß Anspruch 11, wobei der Schritt des Vergleichens der Vielzahl von Parametern (P1, P2, P3) von jeder von der Vielzahl von Daten (MSG1, MSG2, MSG3), um die Vielzahl von ähnlichen Daten zu erhalten, Folgendes beinhaltet: Bestimmen, dass erste Daten und zweite Daten innerhalb der Vielzahl von Daten ähnliche Daten sind, falls die ersten Daten und die zweiten Daten mindestens einen identischen übereinstimmenden Parameter aufweisen, oder Auffordern eines Benutzers, manuell zu bestimmen, ob erste Daten und zweite Daten innerhalb der Vielzahl von Daten ähnliche Daten sind, falls die ersten Daten und die zweiten Daten mindestens einen ähnlichen aber nicht identischen übereinstimmenden Parameter aufweisen.

13. Medium gemäß Anspruch 11, das ferner Folgendes beinhaltet:
Anzeigen jeder von einer Vielzahl von nicht ähnlichen Daten innerhalb der Vielzahl von Daten (MSG1, MSG2, MSG3) mit Ausnahme der Vielzahl von ähnlichen Daten.

14. Maschinenlesbares Speichermedium gemäß Anspruch 11, wobei Erhalten von Antwortdaten (MSG_rep), die den kombinierten Daten (MSG_comb) entsprechen, von einem Benutzer; und
Antworten auf mindestens eine von der Vielzahl von ähnlichen Daten mit den Antwortdaten (MSG_rep).

15. Medium gemäß Anspruch 14, wobei der Schritt des Antwortens auf mindestens eine von der Vielzahl von ähnlichen Daten mit den Antwortdaten (MSG_rep) das Auffordern eines Benutzers, manuell zu bestimmen, ob auf alle von der Vielzahl von ähnlichen Daten mit den Antwortdaten (MSG_rep) geantwortet werden soll, beinhaltet.

## Revendications

1. Une méthode de combinaison de données de réseau pour un dispositif mobile (40), comprenant :
le fait de connecter le dispositif mobile (40) via un réseau (30) à une pluralité de réseaux (SN1, SN2, SN3), la pluralité de réseaux (SN1, SN2, SN3) comprenant de préférence un ou plusieurs réseaux d'entre un réseau public, un réseau privé et un réseau social ;
le fait de recevoir au dispositif mobile (40) une pluralité de données (MSG1, MSG2, MSG2) provenant de la pluralité de réseaux ;
le fait d'obtenir une pluralité de paramètres (P1, P2, P3), la pluralité de paramètres (P1, P2, P3) étant de préférence un ou plusieurs éléments d'entre l'ID de l'auteur, le contenu données, le contenu image obtenu de chaque donnée de la pluralité de données, le contenu vidéo obtenu de chaque donnée de la pluralité de données, le moment générateur de données, le lieu générateur de données, le type de réseau, et l'adresse de protocole internet (IP) provenant de chaque donnée de la pluralité de données (MSG1, MSG2, MSG2) ;
le fait de comparer la pluralité de paramètres (P1, P2, P3) de chaque donnée de la pluralité de données (MSG1, MSG2, MSG2), afin d'obtenir une pluralité de données semblables, la pluralité de données semblables ayant de préférence au moins un paramètre semblable, sélectionné parmi au moins un élément d'entre l'ID de l'auteur, le contenu données, le contenu image obtenu de chaque donnée de la pluralité de données semblables, le contenu vidéo obtenu de chaque donnée de la pluralité de données semblables, le moment générateur de données, le lieu générateur de données, le type de réseau, et l'adresse de protocole internet (IP) ;
le fait de combiner la pluralité de données semblables dans au moins une donnée combinée (MSG_comb) ; et
le fait d'afficher l'au moins une donnée combinée (MSG_comb).

2. La méthode de la revendication 1, dans laquelle l'étape consistant à comparer la pluralité de paramètres (P1, P2, P3) de chaque donnée de la pluralité de données (MSG1, MSG2, MSG2) afin d'obtenir la pluralité de données semblables comprend le fait de déterminer qu'une première donnée et une deuxième donnée au sein de la pluralité de données (MSG1, MSG2, MSG2) sont des données semblables si la première donnée et la deuxième donnée ont au moins un paramètre de concordance identique ou le fait de demander à un utilisateur de déterminer manuellement si une première donnée et une deuxième donnée au sein de la pluralité de données (MSG1, MSG2, MSG2) sont des données semblables si la première donnée et la deuxième donnée ont au moins un paramètre de concordance semblable mais pas identique.

3. La méthode de la revendication 1, comprenant en sus le fait d'afficher chaque donnée d'une pluralité de données dissemblables au sein de la pluralité de données (MSG1, MSG2, MSG2) en excluant la pluralité de données semblables.

4. Une méthode de la revendication 1 comprenant :
le fait d'obtenir d'un utilisateur une donnée de réponse correspondant à la donnée combinée (MSG_comb) ; et
le fait de répondre à au moins une donnée de la pluralité de données semblables avec la donnée de réponse (MSG_rep).

5. La méthode de la revendication 4, dans laquelle l'étape consistant à répondre à au moins une donnée de la pluralité de données semblables avec la donnée de réponse (MSG_rep) comprend le fait de demander à un utilisateur de déterminer manuellement s'il convient de répondre à toutes les données de la pluralité de données semblables avec la donnée de réponse (MSG_rep).

6. Un dispositif mobile (40) pour combiner des données de réseau, comprenant :
une unité d'interfaçage de communication (400), pour se connecter via un réseau (30) à une pluralité de réseaux (SN1, SN2, SN3), la pluralité de réseaux (SN1, SN2, SN3) comprenant de préférence un ou plusieurs réseaux d'entre un réseau public, un réseau privé et un réseau social ;
un moyen de traitement (402) ; et
une unité de stockage (404), pour stocker un code programme (406) afin d'indiquer au moyen de traitement (402) de procéder aux étapes suivantes :
recevoir une pluralité de données (MSG1, MSG2, MSG3) provenant de la pluralité de réseaux (SN1, SN2, SN3) ;
obtenir une pluralité de paramètres (P1, P2, P3), la pluralité de paramètres (P1, P2, P3) étant de préférence un ou plusieurs éléments d'entre l'ID de l'auteur, le contenu données, le contenu image obtenu de chaque donnée de la pluralité de données, le contenu vidéo obtenu de chaque donnée de la pluralité de données, le moment générateur de données, le lieu générateur de données, le type de réseau, et l'adresse de protocole internet (IP) provenant de chaque donnée de la pluralité de données (MSG1, MSG2, MSG3) ;
comparer la pluralité de paramètres (P1, P2, P3) de chaque donnée de la pluralité de données (MSG1, MSG2, MSG3), afin d'obtenir une pluralité de données semblables, la pluralité de données semblables ayant de préférence au moins un paramètre semblable, sélectionné parmi au moins un élément d'entre l'ID de l'auteur, le contenu données, le contenu image obtenu de chaque donnée de la pluralité de données semblables, le contenu vidéo obtenu de chaque donnée de la pluralité de données semblables, le moment générateur de données, le lieu générateur de données, le type de réseau, et l'adresse de protocole internet (IP) ;
combiner la pluralité de données semblables dans au moins une donnée combinée (MSG_comb) ; et
afficher l'au moins une donnée combinée (MSG_comb).

7. Le dispositif mobile (40) de la revendication 6, dans lequel le moyen de traitement (402) détermine qu'une première donnée et une deuxième donnée au sein de la pluralité de données (MSG1, MSG2, MSG3) sont des données semblables si la première donnée et la deuxième donnée ont au moins un paramètre de concordance identique ou le moyen de traitement (402) demande à un utilisateur de déterminer manuellement si une première donnée et une deuxième donnée au sein de la pluralité de données (MSG1, MSG2, MSG3) sont des données semblables si la première donnée et la deuxième donnée ont au moins un paramètre de concordance semblable mais pas identique.

8. Le dispositif mobile (40) de la revendication 6, dans lequel le code programme (406) indique en sus au moyen de traitement (402) d'afficher chaque donnée d'une pluralité de données dissemblables au sein de la pluralité de données en excluant la pluralité de données semblables.

9. Un dispositif mobile (40) de la revendication 6, comprenant :
l'unité de stockage (404), pour stocker un code programme (406) afin d'indiquer au moyen de traitement (402) de procéder aux étapes suivantes :
obtenir d'un utilisateur une donnée de réponse (MSG_rep) correspondant à la donnée combinée (MSG_comb) ; et
répondre à au moins une donnée de la pluralité de données semblables avec la donnée de réponse (MSG_rep).

10. Le dispositif mobile (40) de la revendication 9, dans lequel le moyen de traitement (402) demande à un utilisateur de déterminer manuellement s'il convient de répondre à toutes les données de la pluralité de données semblables avec la donnée de réponse (MSG_rep).

11. Un support de stockage lisible par une machine stockant des instructions de programme exécutables qui, lorsqu'elles sont exécutées, amènent un système de traitement de données à mettre en oeuvre une méthode, comprenant :
le fait de connecter un dispositif mobile (40) via un réseau (30) à une pluralité de réseaux (SN1, SN2, SN3) ;
le fait de recevoir une pluralité de données (MSG1, MSG2, MSG3) provenant de la pluralité de réseaux (SN1, SN2, SN3), la pluralité de réseaux (SN1, SN2, SN3) comprenant de préférence un ou plusieurs réseaux d'entre un réseau public, un réseau privé et un réseau social ;
le fait d'obtenir une pluralité de paramètres (P1, P2, P3), la pluralité de paramètres étant de préférence un ou plusieurs éléments d'entre l'ID de l'auteur, le contenu données, le contenu image obtenu de chaque donnée de la pluralité de données, le contenu vidéo obtenu de chaque donnée de la pluralité de données, le moment générateur de données, le lieu générateur de données, le type de réseau, et l'adresse de protocole internet (IP) provenant de chaque donnée de la pluralité de données (MSG1, MSG2, MSG3) ;
le fait de comparer la pluralité de paramètres (P1, P2, P3) de chaque donnée de la pluralité de données (MSG1, MSG2, MSG3), afin d'obtenir une pluralité de données semblables, la pluralité de données semblables ayant de préférence au moins un paramètre semblable, sélectionné parmi au moins un élément d'entre l'ID de l'auteur, le contenu données, le contenu image obtenu de chaque donnée de la pluralité de données semblables, le contenu vidéo obtenu de chaque donnée de la pluralité de données semblables, le moment générateur de données, le lieu générateur de données, le type de réseau, et l'adresse de protocole internet (IP) ;
le fait de combiner la pluralité de données semblables dans au moins une donnée combinée (MSG_comb) ; et
le fait d'afficher l'au moins une donnée combinée (MSG_comb).

12. Le support tel que dans la revendication 11, dans lequel l'étape consistant à comparer la pluralité de paramètres (P1, P2, P3) de chaque donnée de la pluralité de données (MSG1, MSG2, MSG3) afin d'obtenir la pluralité de données semblables comprend le fait de déterminer qu'une première donnée et une deuxième donnée au sein de la pluralité de données sont des données semblables si la première donnée et la deuxième donnée ont au moins un paramètre de concordance identique ou le fait de demander à un utilisateur de déterminer manuellement si une première donnée et une deuxième donnée au sein de la pluralité de données sont des données semblables si la première donnée et la deuxième donnée ont au moins un paramètre de concordance semblable mais pas identique.

13. Le support tel que dans la revendication 11, comprenant en sus le fait d'afficher chaque donnée d'une pluralité de données dissemblables au sein de la pluralité de données (MSG1, MSG2, MSG3) en excluant la pluralité de données semblables.

14. Un support de stockage lisible par une machine de la revendication 11 dans lequel obtenir d'un utilisateur une donnée de réponse (MSG_rep) correspondant à la donnée combinée (MSG_comb) ; et
répondre à au moins une donnée de la pluralité de données semblables avec la donnée de réponse (MSG_rep).

15. Le support tel que dans la revendication 14, dans lequel l'étape consistant à répondre à au moins une donnée de la pluralité de données semblables avec la donnée de réponse (MSG_rep) comprend le fait de demander à un utilisateur de déterminer manuellement s'il convient de répondre à toutes les données de la pluralité de données semblables avec la donnée de réponse (MSG_rep).
